# EUROPÄISCHE PATENTANMELDUNG

(11) **EP 4 049 822 A1**
(43) Veröffentlichungstag der Anmeldung: **31.08.2022**
(21) Anmeldenummer: 22156407.3
(22) Anmeldetag: 11.02.2022
(51) Int. Cl.: B29C 45/14

(54) **VERFAHREN ZUR HERSTELLUNG EINES VERBUNDBAUTEILS SOWIE VERBUNDBAUTEIL**

(30) Priorität: 26.02.2021 DE 102021104719
(71) Anmelder: FKT GmbH, 85104 Pförring (DE)
(72) Erfinder: Großhauser, Florian, 85110 Oberemmendorf (DE); Günthner, Guido, 85104 Pförring/Lobsing (DE)
(74) Vertreter: Canzler & Bergmeier Patentanwälte Partnerschaft mbB

(57) **Zusammenfassung**

Bei einem Verfahren zur Herstellung eines Verbundbauteils (1) mit wenigstens einer Metallkomponente (2) und wenigstens einer Kunststoffkomponente (3) wird zur Erzeugung einer haftvermittelnden Mikrostruktur (6) eine Oberfläche (4) der Metallkomponente (2) mittels eines Laserstrahls zumindest abschnittsweise aufgeraut, wobei wenigstens eine Haftfläche (5) auf der Oberfläche (4) erzeugt wird, wobei die Metallkomponente (2) in ein Spritzgusswerkzeug eingelegt wird und die Kunststoffkomponente (3) in einem Spritzgussverfahren auf die in das Spritzgusswerkzeug eingelegte Metallkomponente (2) aufgebracht wird. Zur Erzeugung der Mikrostruktur (6) werden der Laserstrahl und die zu strukturierende Oberfläche (4) der Metallkomponente (2) derart relativ zueinander bewegt, dass eine Mikrostruktur (6) mit mehreren voneinander beabstandeten Gravurlinien (7) und zwischen den Gravurlinien (7) angeordneten, sich entlang der Gravurlinien (7) erstreckenden Erhöhungen (18) erzeugt wird. Bei einem entsprechenden Verbundbauteil (1) mit wenigstens einer Metallkomponente (2) und wenigstens einer Kunststoffkomponente (3), wobei eine Oberfläche (4) der Metallkomponente (2) wenigstens eine Haftfläche (5) mit einer mittels eines Laserstrahls erzeugten, haftvermittelnden Mikrostruktur (6) aufweist, und wobei die Kunststoffkomponente (3) auf die Metallkomponente (2) aufgespritzt ist, weist die Mikrostruktur (6) mehrere voneinander beabstandete Gravurlinien (7) und zwischen den Gravurlinien (7) angeordnete, sich entlang der Gravurlinien (7) erstreckende Erhöhungen (18) auf.

## Beschreibung

Die vorliegende Erfindung betrifft ein Verfahren zur Herstellung eines Verbundbauteils mit wenigstens einer Metallkomponente und wenigstens einer Kunststoffkomponente, wobei zur Erzeugung einer haftvermittelnden Mikrostruktur eine Oberfläche der Metallkomponente mittels eines Laserstrahls zumindest abschnittsweise aufgeraut wird, wobei wenigstens eine Haftfläche auf der Oberfläche erzeugt wird, wobei die Metallkomponente in ein Spritzgusswerkzeug eingelegt wird und die Kunststoffkomponente in einem Spritzgussverfahren auf die in das Spritzgusswerkzeug eingelegte Metallkomponente aufgebracht wird. Weiterhin betrifft die Erfindung ein entsprechendes Verbundbauteil.

Verbundbauteile aus Metall und Kunststoff sind in der Technik weit verbreitet und finden beispielsweise in der Automobilindustrie eine breite Anwendung. Mittels derartiger von Verbundbauteile ist es möglich, die Vorteile beider Werkstoffe in einem Bauteil zu vereinen und dadurch ein Bauteil zu erhalten, welches aufgrund der Kunststoffkomponente ein geringes Gewicht aufweist und kostengünstig hergestellt werden kann und andererseits aufgrund der Metallkomponente dennoch eine hohe Festigkeit und Stabilität aufweist. Auch die Herstellung solcher Verbundbauteile in einem Kunststoffspritzgussverfahren ist bekannt.

Die DE 10 2013 018 452 A1 beschreibt ein Verfahren und eine Vorrichtung zur Herstellung eines solchen Verbundbauteiles. Bei dem Verfahren wird die Oberfläche der Metallkomponente beispielsweise durch Sandstrahlen oder eine Laserstrukturierung modifiziert, um die Haftung zu verbessern und die Verbundfestigkeit zu steigern. Die Metallkomponente wird sodann in ein Spritzgießwerkzeug eingelegt und direkt in dem Spritzgießzyklus vor der Einspritzung der Kunststoffkomponente aufgeheizt. Durch das Aufheizen soll die Kunststoffkomponente gut in die Vertiefungen der Metallkomponente eindringen, wobei sich eine Art Hinterschnitt ausbilden soll. Einzelheiten zur Art der Strukturierung werden nicht genannt.

Die EP 3 154 764 B1 beschreibt in ähnlicher Weise ein Verfahren zum Herstellen eines Hybridbauteiles aus Metall und Kunststoff, bei welchem zur Haftungsverbesserung in die Metalloberfläche mittels Kurzpuls-Laserstrahlung makroskopische und mikroskopische Hinterschnitte mit stochastisch willkürlichen Rauheitsformen eingebracht werden. Die in einem Spritzgießprozess aufgebrachte Kunststoffkomponente soll die Hinterschnitte ausfüllen, sodass eine Hinterkrallung erfolgt. Die Aufrauhungstiefe der makroskopischen Hinterschnitte liegt dabei im Bereich von 0,1 mm - 1 mm.

Aufgabe der vorliegenden Erfindung ist es, ein Verfahren zur Herstellung eines Verbundbauteils sowie ein Verbundbauteil vorzuschlagen, welche eine gute Haftung und einfache Herstellung ermöglichen.

Die Aufgabe wird gelöst durch ein Verfahren und ein Verbundbauteil mit den Merkmalen der unabhängigen Patentansprüche.

Bei einem Verfahren zur Herstellung eines Verbundbauteils mit wenigstens einer Metallkomponente und wenigstens einer Kunststoffkomponente wird zur Erzeugung einer haftvermittelnden Mikrostruktur eine Oberfläche der Metallkomponente mittels eines Laserstrahls zumindest abschnittsweise aufgeraut, wobei wenigstens eine Haftfläche auf der Oberfläche erzeugt wird. Die Metallkomponente wird in ein Spritzgusswerkzeug eingelegt und die Kunststoffkomponente in einem Spritzgussverfahren auf die in das Spritzgusswerkzeug eingelegte Metallkomponente aufgebracht.

Bei einem Verbundbauteil mit wenigstens einer Metallkomponente und wenigstens einer Kunststoffkomponente weist eine Oberfläche der Metallkomponente wenigstens eine Haftfläche mit einer mittels eines Laserstrahls erzeugten, haftvermittelnden Mikrostruktur auf. Die Kunststoffkomponente ist auf die Metallkomponente aufgespritzt.

Zur Erzeugung der Mikrostruktur werden der Laserstrahl und die zu strukturierende Oberfläche der Metallkomponente derart relativ zueinander bewegt, dass eine Mikrostruktur mit mehreren voneinander beabstandeten Gravurlinien und zwischen den Gravurlinien angeordneten, sich entlang der Gravurlinien erstreckenden Erhöhungen erzeugt wird. Bei dem Verbundbauteil weist entsprechend die Mikrostruktur mehrere voneinander beabstandete Gravurlinien und zwischen den Gravurlinien angeordnete, sich entlang der Gravurlinien erstreckende Erhöhungen auf. Die vorliegende Erfindung hat herausgefunden, dass es für eine gute Haftung der Kunststoffkomponente auf der Metallkomponente nicht unbedingt erforderlich ist, möglichst tiefe und stochastisch willkürliche bzw. unterschiedliche Eindringkrater mit deutlichen Hinterschnitten zu erzeugen. Vielmehr kann auch mit einer relativ gleichmäßigen Mikrostruktur mit Gravurlinien und dazwischen angeordneten Erhöhungen und mit einer vergleichsweise geringen Aufrauhungstiefe eine sehr gute Haftung erzielt werden. Für die Herstellung der Gravurlinien bzw. der Mikrostruktur ist es ausreichend, den Laserstrahl gleichmäßig über die Oberfläche der Metallkomponente zu bewegen. Es ist nicht erforderlich, Laserstrahlen mit unterschiedlichen Richtungswinkeln oder Neigungswinkel oder unterschiedlichen Laserenergien anzuwenden. Die Mikrostruktur kann daher mit einer einfachen Laservorrichtung und kostengünstig innerhalb einer kurzen Prozesszeit auf die Metalloberfläche aufgebracht werden.

Vorteilhaft ist es, wenn die Gravurlinien parallel zueinander und vorzugsweise in regelmäßigen Abständen zueinander erzeugt werden bzw. bei dem Verbundbauteil parallel zueinander und vorzugsweise in regelmäßigen Abständen zueinander angeordnet sind. Die Führung des Laserstrahls ist hierdurch weiter vereinfacht. Zudem wird durch die Gleichmäßigkeit der Mikrostruktur eine Haftfläche mit über die Fläche gleichbleibenden Hafteigenschaften bereitgestellt. Ebenso wird hierdurch die Metallkomponente nicht beeinträchtigt bzw. weist die Metallkomponente über die Haftfläche gleichbleibende mechanische Eigenschaften auf. Kleinere lokale Beschädigungen der Metallkomponente, die sich im folgenden Prozess und oder im späteren Betrieb negativ auswirken könnten, werden hierdurch vermieden.

Weiterhin ist es vorteilhaft, wenn eine hinterschneidungsfreie Mikrostruktur erzeugt wird bzw. die Mikrostruktur hinterschneidungsfrei ist. Vorzugsweise wird hierzu der Laserstrahl zumindest in einer Ebene, die sich quer zu den Gravurlinien und senkrecht zur Oberfläche erstreckt, senkrecht, d.h. ohne einen Richtungswinkel, auf die Oberfläche gerichtet. Vorzugsweise wird der Laserstrahl auch in einer Ebene, die sich längs der Gravurlinien und senkrecht zur Oberfläche erstreckt, senkrecht auf die Oberfläche gerichtet. Die Laservorrichtung kann hierdurch besonders einfach ausgeführt sein und benötigt keine Verstellmöglichkeiten.

Vorteilhaft ist es auch, wenn die Mikrostruktur in Form einer Wellenstruktur erzeugt wird, wobei die Gravurlinien Wellentäler ausbilden, zwischen welchen sich Wellenberge erstrecken. Hierdurch wird eine besonders gleichmäßige Mikrostruktur erzeugt, die weiter zu gleichmäßigen Hafteigenschaften und über die Haftfläche gleichbleibenden mechanischen Eigenschaften beiträgt. Zudem wird durch die dichte Anordnung der Gravurlinien eine besonders gute Haftkraft erzeugt.

Vorteile bringt es zudem mit sich, wenn die Mikrostruktur mit einer maximalen Profiltiefe von weniger als 50 µm, vorzugsweise weniger als 25 µm, besonderes bevorzugt weniger als 20 µm erzeugt wird. Bei dem Verbundbauteil weist die Mikrostruktur eine maximale Profiltiefe von weniger als 50 µm, vorzugsweise weniger als 25 µm, besonders bevorzugt weniger als 20 µm auf. Die Profiltiefe bzw. Aufbewahrungstiefe ergibt sich aus dem Höhenunterschied zwischen jeweils einer Erhöhung, insbesondere einem Wellenberg, und einer Gravurlinie, insbesondere einem Wellental. Eine Mikrostruktur mit einer derart geringen Aufrauhungstiefe ermöglicht die Verwendung besonders dünner Metallkomponenten. Hierdurch können sehr kostengünstig Bauteile wie Sichtblenden und dergleichen kostengünstig aus einem Kunststoffmaterial hergestellt werden. Ist die Metallkomponente auf einer Sichtseite angeordnet, bietet diese dennoch ein hochwertiges Erscheinungsbild und stellt eine verschleißfeste Oberfläche dar.

Es ist daher auch vorteilhaft, wenn die Metallkomponente eine Wandstärke von weniger als 1 mm, vorzugsweise von weniger als 0,7 mm und besonderes bevorzugt von weniger als 0,5 mm aufweist. Aufgrund der geringen Eindringtiefe des Laserstrahls und der nur kurzen Bearbeitungsdauer sind auch bei derart dünnwandigen Metallkomponenten keine Verfärbungen oder Verformungen auf der Sichtseite der Metallkomponente zu befürchten.

Des Weiteren ist es bei dem Verfahren vorteilhaft, wenn die Metallkomponente vor dem Aufbringen der Kunststoffkomponente aufgeheizt wird, wobei vorzugsweise die Metallkomponente durch Einlegen in das Spritzgusswerkzeug aufgeheizt wird. Insbesondere bei der Verwendung dünner Metallkomponenten ist die Temperatur, welche das Spritzgießwerkzeug vom vorherigen Spritzgießzyklus noch aufweist, vollkommen ausreichend, um die Metallkomponente zu erwärmen. Es sind somit für die Herstellung des Verbundbauteiles bzw. für das Aufheizen der Metallkomponente keine gesonderten Prozesstechniken erforderlich, die bei anderen, ähnlichen Prozessen ansonsten zwingend nötig sind.

Besonders vorteilhaft ist es, wenn die Gravurlinien einen Abstand von 0,05 mm - 0,5 mm, bevorzugt von 0,1 mm - 0,3 mm zueinander aufweisen. Bei einem geringeren Abstand der Gravurlinien werden bis zu einem gewissen Grad höhere mittlere Haftkräfte erreicht, allerdings bedingt dies auch eine deutliche Verlängerung der Prozesszeit. Mit einem Abstand zwischen 0,1 mm bis 0,3 mm kann ein optimaler Kompromiss aus einer guten Haftkraft und einer akzeptablen, kurzen Prozesszeit erreicht werden.

Nach einer Weiterbildung der Erfindung ist es vorteilhaft, wenn die Gravurlinien auf der wenigstens einen Haftfläche ein makroskopisches Muster, insbesondere eine geometrische Figur, ausbilden. Es hat sich gezeigt, dass auch die Form der Haftfläche einen Einfluss auf die gesamte Haftkraft der Kunststoffkomponente auf der Metallkomponente hat. Die geometrische Figur bzw. das makroskopische Muster kann dabei auch Ausnehmungen, d. h. Teilflächen ohne Gravurlinien, beinhalten. Da mit derartigen Ausnehmungen insgesamt weniger Gravurlinien erzeugt werden müssen, kann hierdurch eine Reduktion der Prozesszeit erreicht werden, wobei dennoch die Haftkraft gegenüber einer Form ohne Ausnehmungen kaum reduziert ist.

Besonders vorteilhaft ist es, wenn das makroskopische Muster mehrere nebeneinander und/oder übereinander angeordnete geometrische Figuren, insbesondere Ringe und/oder Dreiecke und/oder Vierecke aufweist. Auch diese können wiederum Ausnehmungen wie oben beschrieben aufweisen. Mittels einer derartigen Ausführung ist es beispielsweise möglich, auf einer Haftfläche insgesamt weit weniger als 50 % der Fläche zu strukturieren und damit dennoch im Vergleich zu einer vollflächigen Strukturierung eine noch immer sehr gute Haftung der Kunststoffkomponente auf der Metallkomponente zu erzielen.

Ebenso bringt es Vorteile mit sich, wenn mehrere, voneinander beabstandete Haftflächen auf der Oberfläche der Metallkomponente angeordnet sind. Auch dies trägt zu einer kürzeren Prozesszeit bei wobei dennoch auch mit mehreren Einzelflächen eine gute Haftung der Kunststoffkomponente auf der Metallkomponente erreicht werden kann.

Auch ist es vorteilhaft, wenn die wenigstens eine Haftfläche eine Mikrostruktur mit wenigstens zwei um einen Winkel zueinander versetzten und einander überlagerten Gravurlinien aufweist. Es bildet sich hierdurch eine Struktur mit einzelnen Erhebungen und Vertiefungen aus, welche ebenfalls eine besonders gute Haftung ermöglicht.

Vorteilhaft ist es zudem, wenn die Kunststoffkomponente ein thermoplastisches Polymer, insbesondere ein Polypropylen (PP) und/oder ein AcrylnitrilButadien-Styrol (ABS) und/oder ein Polyamid (PA) oder ein diese Materialien enthaltendes Compound-Material beinhaltet. Mittels eines Compound-Materials kann die Fließfähigkeit des Materials während des Spritzgießprozesses und somit die Oberflächenreaktivität des Kunststoffmaterials eingestellt werden. Zudem können hierdurch Bauteile mit einer deutlich höheren Festigkeit, Chemikalienbeständigkeit und einem höheren Gebrauchstemperaturbereich ermöglicht werden.

Besonders vorteilhaft ist es, wenn die Kunststoffkomponente ein oberflächenaktiviertes, thermoplastisches Compoundmaterial beinhaltet. Mittels eines solchen Kunststoffmaterials kann eine besonders gute Haftung der Kunststoffkomponente auf der Metallkomponente erzielt werden.

Vorteilhaft ist es auch, wenn die Metallkomponente und die Kunststoffkomponente nur mittels der haftvermittelnden Mikrostruktur miteinander verbunden sind. Das zusätzliche Aufbringen eines beispielsweise thermoreaktiven Haftvermittlers vor dem Spritzgießprozess ist aufgrund der beschriebenen Mikrostruktur nicht erforderlich.

Daneben ist es vorteilhaft, wenn die Kunststoffkomponente direkt angespritzte Befestigungselemente zur Befestigung des Verbundbauteils aufweist. Die einfache und kostengünstige Herstellung des Verbundbauteils sowie dessen Montage werden hierdurch weiter unterstützt.

Weitere Vorteile der Erfindung sind in den nachfolgenden Ausführungsbeispielen beschrieben. Es zeigen, jeweils schematisch:
- **Figur 1**: eine schematische, geschnittene Seitenansicht eines Verbundbauteils,
- **Figur 2**: einen vergrößerten Ausschnitt eines Verbundbauteils in einer schematischen Schnittdarstellung,
- **Figur 3**: eine schematische Schnittdarstellung einer Metallkomponente mit einer haftvermittelnden Mikrostruktur,
- **Figur 4**: eine schematische, perspektivische Ansicht einer Oberfläche einer Metallkomponente mit einer Mikrostruktur,
- **Figur 5**: eine schematische, perspektivische Ansicht einer Oberfläche einer Metallkomponente mit einer Mikrostruktur nach einer weiteren Ausführung,
- **Fig. 6 - 11**: eine schematische Draufsicht auf eine Metallkomponente mit einer Haftfläche in verschiedenen Ausführungen,
- **Figur 12**: eine schematische Draufsicht auf eine Metallkomponente mit mehreren, voneinander beabstandeten Haftflächen nach einer ersten Ausführung,
- **Figur 13**: eine schematische Draufsicht auf eine Metallkomponente mit mehreren, voneinander beabstandeten Haftflächen nach einer zweiten Ausführung,
- **Figur 14**: eine schematische Darstellung einer Haftfläche mit mehreren nebeneinander und übereinander angeordneten geometrischen Figuren,
- **Figur 15**: eine schematische Darstellung mehrerer Gravurlinien, welche miteinander verbunden sind,
- **Figur 16**: eine schematische Darstellung einer weiteren Haftfläche mit mehreren nebeneinander und übereinander angeordneten geometrischen Figuren nach einer alternativen Ausführung, sowie
- **Figur 17**: eine schematische Darstellung einer weiteren Haftfläche mit mehreren nebeneinander und übereinander angeordneten geometrischen Figuren nach einer weiteren alternativen Ausführung.

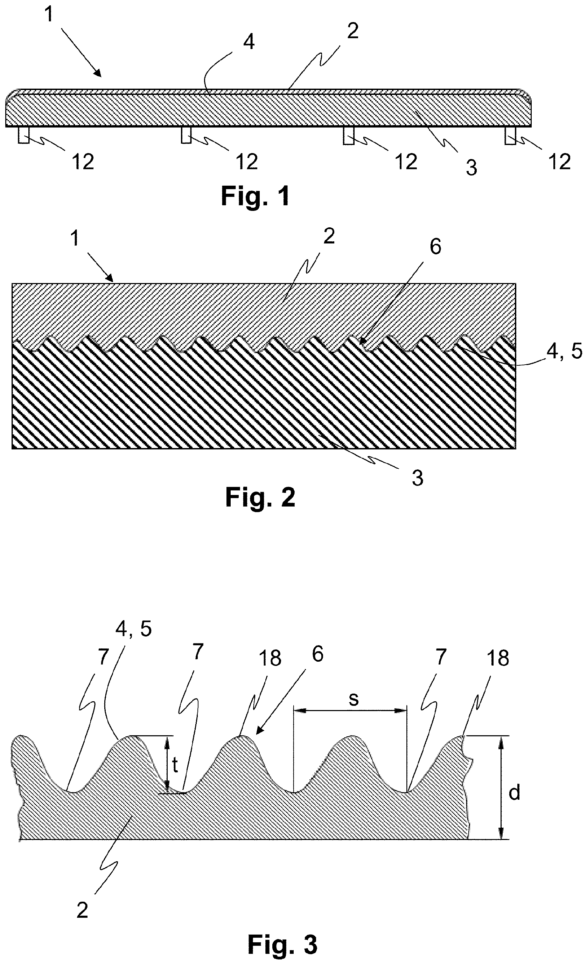

Figur 1 zeigt ein Verbundbauteil in einer schematischen, geschnittenen Seitenansicht. Das Verbundbauteil 1 beinhaltet eine Metallkomponente 2 sowie eine Kunststoffkomponente 3, welche durch einen Spritzgießverfahren miteinander verbunden sind. Mittels eines Spritzgießverfahrens ist es in an sich bekannter Weise möglich, die Metallkomponente 2 und die Kunststoffkomponente 3 direkt während des Aufbringens und Formens des Kunststoffmaterials miteinander zu verbinden.

Bei den vorliegend dargestellten Verbundbauteil 1 bildet die Metallkomponente 2 die nach außen gerichtete Sichtseite des Verbundbauteiles 1, während die Kunststoffkomponente 3 eine Art Träger für die Metallkomponente 2 bildet. An die Kunststoffkomponente 3 sind gemäß vorliegendem Beispiel weiterhin Befestigungselemente 12, die beispielsweise als Pins oder Clips oder dergleichen ausgebildet sein können, direkt angespritzt. Mittels der Befestigungselemente 12 kann das Verbundbauteile direkt an seinem Einsatzort montiert werden. Eine derartige Ausführung ist insbesondere für Sichtblenden in der Automobilindustrie vorteilhaft. Denkbar ist es, abweichend von der gezeigten Darstellung, jedoch auch, dass die Metallkomponente ein Trägerteil ausbildet, welches von einem Kunststoffmaterial umspritzt ist oder auf welches ein Kunststoffmaterial aufgespritzt ist. Dies kommt beispielsweise in Frage, wenn erhöhte Festigkeits- und Stabilitätsanforderungen an ein Bauteil gestellt werden, jedoch eine weichere Oberfläche oder eine Oberfläche mit einer bestimmten Optik gewünscht wird.

Figur 2 zeigt einen vergrößerten Ausschnitt eines Verbundbauteils in einer schematischen Schnittdarstellung. Dabei ist ersichtlich, dass auf der Oberfläche 4 der Metallkomponente 2 eine Haftfläche 5 ausgebildet ist, welche eine haftvermittelnde Mikrostruktur 6 beinhaltet. Die Mikrostruktur 6 weist langgestreckte Gravurlinien 7 (s. Fig. 3) und dazwischen angeordnete, langgestreckte Erhöhungen 18 auf und erscheint daher im Schnittbild wellenartig.

Figur 3 zeigt eine schematische Schnittdarstellung einer Metallkomponente 2, auf deren Oberfläche 4 eine Haftfläche 5 in Form einer Mikrostruktur 6 erzeugt wurde. Die Mikrostruktur 6 wird mittels eines Laserstrahls erzeugt. Dabei werden mehrere zueinander beabstandete und nebeneinander angeordnete Gravurlinien 7 erzeugt, deren Gesamtheit dann die Mikrostruktur 6 miteinander abwechselnd folgenden, langgestreckten Erhöhungen 8 und den langgestreckten, vertieften Gravurlinien 7ausbildet. Die Profiltiefe t der Mikrostruktur 6 ergibt sich aus dem Höhenunterschied zwischen dem höchsten Punkt einer Erhöhung 18 und dem tiefsten Punkt einer Vertiefung 14.

Im vorliegenden Beispiel weisen die einzelnen Gravurlinien 7 einen nahezu regelmäßigen Abstand s zueinander auf, so dass die Mikrostruktur 6 wellenartig ausgebildet ist. Denkbar ist es jedoch auch, die Gravurlinien 7 in unterschiedlichen Abständen anzuordnen. Die Mikrostruktur 6 wurde im vorliegenden Beispiel mit einer konstanten Vorschubbewegung des Lasers und/oder der Metallkomponente 2 erzeugt, sodass sich eine vergleichsweise regelmäßige Mikrostruktur 6 ergibt. Ebenso wurde im vorliegenden Beispiel die Mikrostruktur 6 erzeugt, indem der Laserstrahl senkrecht auf die Oberfläche 4 der Metallkomponente 2 gerichtet wurde. Die Mikrostruktur 6 ist hierdurch im vorliegenden Beispiel hinterschneidungsfrei ausgebildet.

Es hat sich gezeigt, dass auch mit einer gleichmäßigen Mikrostruktur 6 mit einer nur geringen maximalen Profiltiefe t von weniger als 50 µm eine sehr gute Haftung der Kunststoffkomponente 3 auf der Metallkomponente 2 erreicht werden kann. Aufgrund der nur geringen Profiltiefe t ist es daher in besonders vorteilhafter Weise auch möglich, sehr dünne Metallkomponenten 2 mit einer Dicke von unter 1 mm oder sogar von 0,5 mm und darunter einzusetzen. Die Haftung kann durch eine günstige Auswahl des Materials der Kunststoffkomponente 3 noch weiter verbessert werden. Als besonders vorteilhaft hat sich ein oberflächenaktiviertes Compoundmaterial erwiesen. Dieses weist eine hohe Oberflächenreaktivität auf und kann sich daher auch mit der aufgrund der wellenartigen Mikrostruktur 6 mit Gravurlinien 7 und langgestreckten Erhöhungen 18 nur wenig vergrößerten Oberfläche im Spritzgussprozess gut verbinden.

Es versteht sich, dass die vorliegend gezeigte, sehr gleichmäßige Mikrostruktur 6 eine idealisierte Darstellung ist. In der Realität weisen natürlich sowohl die Abstände s als auch insbesondere die Profiltiefe t eine gewisse Schwankung auf. Deshalb wird im Rahmen der vorliegenden Anmeldung auch von der maximalen Profiltiefe t gesprochen.

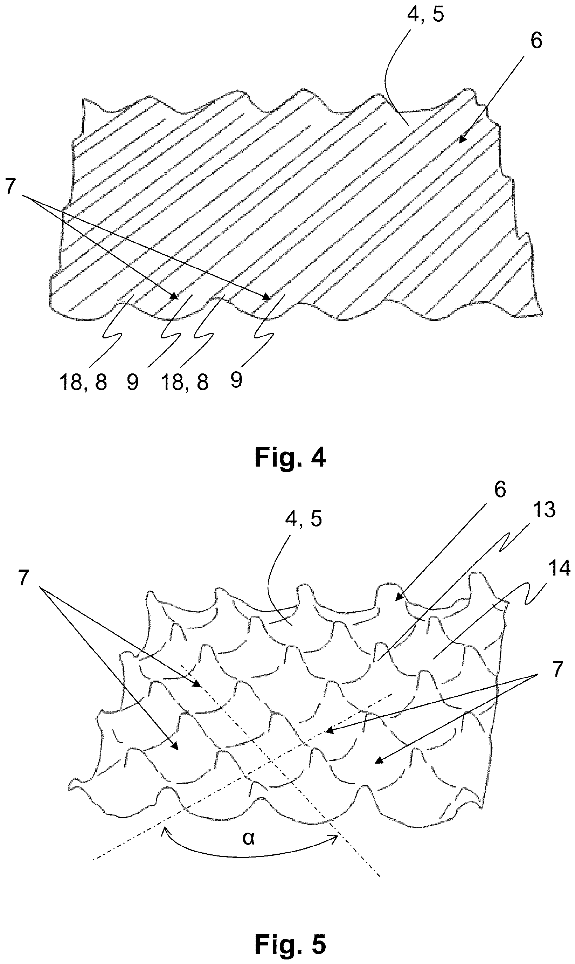

Figur 4 zeigt weiterhin noch eine schematische, perspektivische Ansicht einer Oberfläche 4 einer Metallkomponente 2 mit einer Mikrostruktur 6, die wellenförmig ausgebildet ist. Bei dieser Darstellung sind nun kleinere Schwankungen der Abstände s und/oder der Profiltiefe t (beide nicht bezeichnet) ersichtlich. Die einzelnen Gravurlinien 7 sind auch bei dieser Ausführung parallel zueinander und mit regelmäßigen Abständen ausgebildet. Im vorliegenden Beispiel beträgt der Abstand s der Gravurlinien 7 0,1 mm und die gemittelte Profiltiefe t beträgt 17 µm. Die Gravurlinien 7 bilden bei einer derartigen Wellenstruktur die Wellentäler 9 aus, zwischen denen sich die Erhöhungen 18 in Form von Wellenbergen 8 erstrecken.

Figur 5 zeigt demgegenüber eine schematische, perspektivische Ansicht einer Oberfläche 4 einer Metallkomponente 2 mit einer alternativen Ausführung der Mikrostruktur 6. Die vorliegende Mikrostruktur 6 weist dabei zwei um einen Winkel α zueinander versetzte und einander überlagerte Gravurlinien 7 auf. Im vorliegenden Beispiel sind dabei die beiden Gravurlinien 7jeweils um 90° zueinander versetzt. Es ergibt sich hierdurch eine gleichmäßige Struktur mit einzelnen Erhebungen 13 sowie Vertiefungen 14. Auch in diesem Beispiel beträgt der Abstand s der einzelnen Gravurlinien 7 jeweils 0,1 mm, die gemittelte Profiltiefe t beträgt beispielsweise 25 µm. Die Haftung der Kunststoffkomponente 3 auf der Metallkomponente 2 kann hierdurch nochmals verbessert werden, es wird jedoch eine deutlich längere Prozesszeit benötigt.

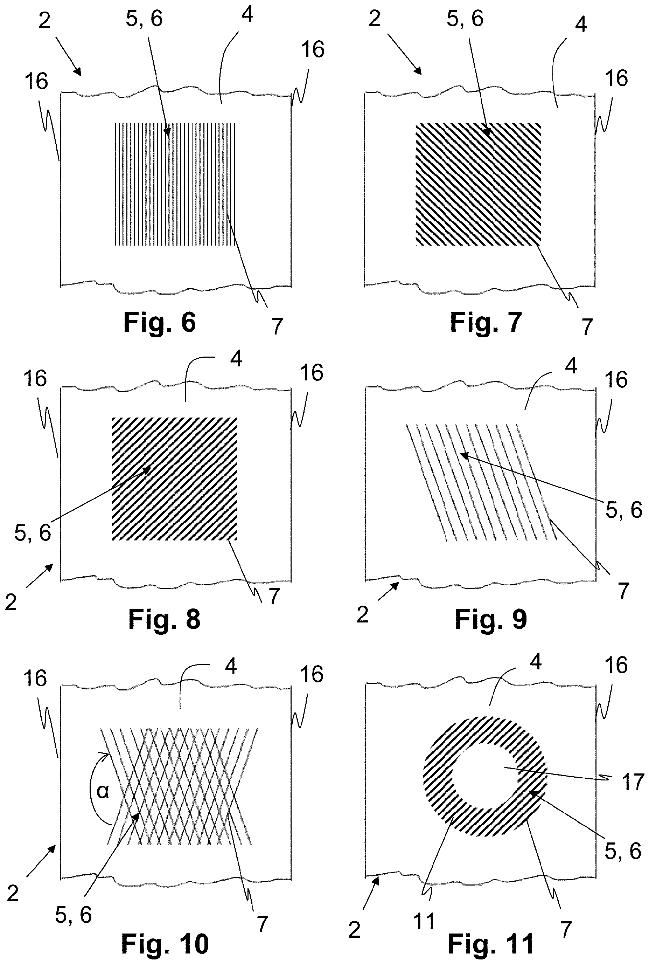

Die Figuren 6-11 zeigen weiterhin noch verschiedene Ausführungen einer Metallkomponente 2, auf deren Oberfläche 4 jeweils eine Haftfläche 5 in Form einer Mikrostruktur 6 mit jeweils mehreren, nebeneinander angeordneten Gravurlinien 7 ausgebildet ist.

Figur 6 zeigt dabei eine Haftfläche 5, bei welcher die einzelnen Gravurlinien 7 im Wesentlichen senkrecht und parallel zu den Seitenkanten 16 der Metallkomponente 2 ausgebildet sind.

Figur 7 zeigt demgegenüber eine Haftfläche 5, bei welcher die einzelnen Gravurlinien 7 in einem Winkel (nicht bezeichnet) zu den Seitenkanten 16 der Metallkomponente 2 angeordnet sind.

Ebenso zeigt die Figur 8 eine Haftfläche 5, bei welcher die Gravurlinien 7 ebenfalls in einem Winkel, jedoch in einer anderen Richtung als die der Figur 7 angeordnet sind.

Sowohl die Gravurlinien 7 der Figur 7 als auch die der Figur 8. weisen dabei gegenüber der Figur 6 eine größere Linienstärke und auch einen größeren Abstand s zueinander auf.

Die Figur 9 zeigt ebenfalls eine Haftfläche 5, bei welcher die einzelnen Gravurlinien 7 einen Winkel mit den Seitenkanten 16 der Metallkomponente 2 einschließen. Im Vergleich zur Darstellung der Figur 7 weisen die einzelnen Gravurlinien 7 einen noch weiter vergrößerten Abstand s zueinander auf.

Figur 10 zeigt ein weiteres Ausführungsbeispiel, bei welchem ähnlich wie schon zu Figur 5 beschrieben eine erste Anordnung von Gravurlinien 7 in einem Winkel zu den Seitenkanten 16 der Metallkomponente 2 aufgebracht ist und eine zweite Anordnung von Gravurlinien 7 um einen Winkel α versetzt zu der ersten Anordnung eingebracht ist.

Wie bereits erwähnt kann eine Vergrößerung des Abstandes s der Gravurlinien 7 die Prozesszeiten für die Herstellung verringern, bringt jedoch auch eine verminderte Haftkraft mit sich.

Figur 11 zeigt weiterhin noch beispielhaft eine Ausführung einer Haftfläche 5, bei welcher die Gravurlinien 7 ein makroskopisches Muster, hier in Form einer geometrischen Figur 11, nämlich eines Kreisringes, ausbilden. Es hat sich gezeigt, dass mittels einer derartigen Ausführung, bei welcher die Haftfläche 5 Ausnehmungen 17 ohne Gravurlinien 7 aufweist, die Prozesszeiten für das Aufbringen der Mikrostruktur 6 reduziert werden können, ohne die Haftkraft merklich zu reduzieren.

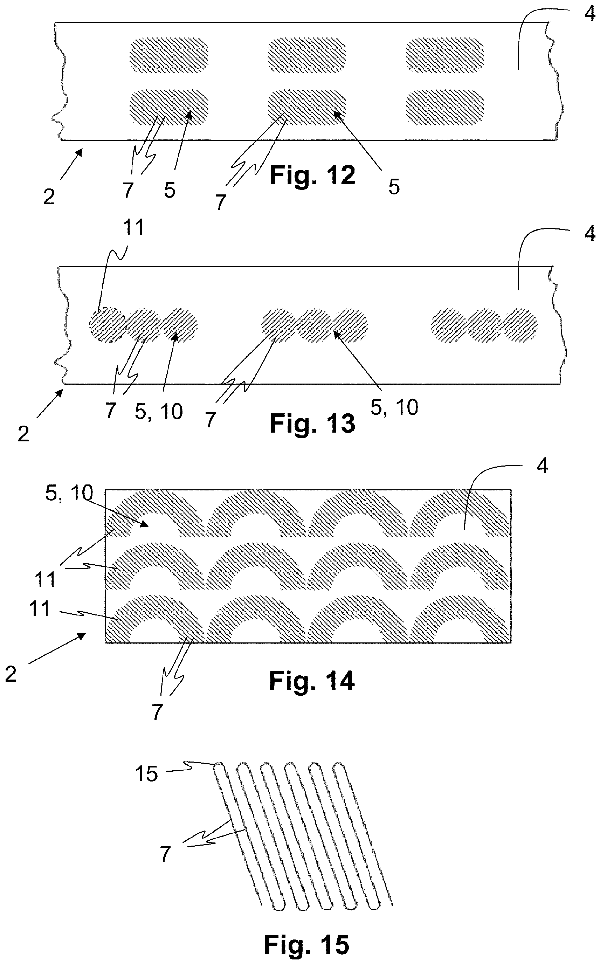

Figur 12 zeigt weiterhin eine schematische Draufsicht auf eine Metallkomponente 2 mit mehreren, voneinander beabstandeten Haftflächen 5 nach einer ersten Ausführung. Die einzelnen Haftflächen 5 sind vorliegend in Form jeweils eines abgerundeten Vierecks ausgeführt. Werden die Haftflächen 5 gleichmäßig über die Oberfläche 4 der Metallkomponente 2 verteilt, so ist es nicht erforderlich, die gesamte Oberfläche 4 zu strukturieren. Mittels einzelner, voneinander beanstandeter Haftflächen 5 ist es möglich, in besonders beanspruchten Bereichen beispielsweise größere oder mehrere Haftflächen 5 auszubilden und in weniger beanspruchten Bereichen nur wenige Haftflächen 5 vorzusehen.

Dem gegenüber zeigt die Figur 13 ebenfalls eine Metallkomponente mit mehreren, voneinander beanstandeten Haftflächen 5, wobei jedoch die einzelnen Haftflächen 5 jeweils ein makroskopisches Muster 10 beinhalten. Das Muster 10 beinhaltet im vorliegenden Beispiel jeweils drei nebeneinander angeordnete geometrische Figuren 11, vorliegend drei nebeneinander angeordneter Kreise. Zur besseren Darstellung der geometrischen Figur 11 ist der Umriss des im Bild ganz links gezeigten Kreises mit einer strichpunktierten Linie dargestellt.

Figur 14 zeigt eine schematische Darstellung einer einzelnen Haftfläche 5, bei welcher die Gravurlinien 7 ein Muster 10 ausbilden. Hier beinhaltet das Muster 10 mehrere nebeneinander und übereinander angeordnete geometrischen Figuren 11. im vorliegenden Beispiel sind die geometrischen Figuren 11 jeweils als Halbringe ausgebildet. Mittels einer derartigen Ausführung kann eine vergleichsweise große Haftfläche 5 auf einer Oberfläche 4 einer Metallkomponente 2 erzeugt werden, wobei dennoch beispielsweise nur 50 % der Fläche tatsächlich mit Gravurlinien 7 strukturiert sind. Die Prozesszeit für das Aufbringen der Mikrostruktur 6 kann hierdurch erheblich reduziert werden, wobei dennoch gegenüber einer vollflächigen Strukturierung nur wenig verminderte Haftkräfte erreicht werden.

Um die Prozesszeit weiterhin noch zu optimieren, ist es vorteilhaft, wenn die Gravurlinien 17 nicht als einzelne Linien mit Absetzen des Lasers hergestellt werden, sondern als eine durchgehende Linie eingebracht werden. Dies ist in Figur 15 gezeigt, bei welcher die einzelnen Gravurlinien 7 an ihren Enden jeweils Verbindungen 15 aufweisen. Der Leser kann hierdurch zumindest eine geometrische Figur 11, unter Umständen auch das gesamte Muster 10 bzw. die gesamte Haftflächen 5 in einem Zug abfahren.

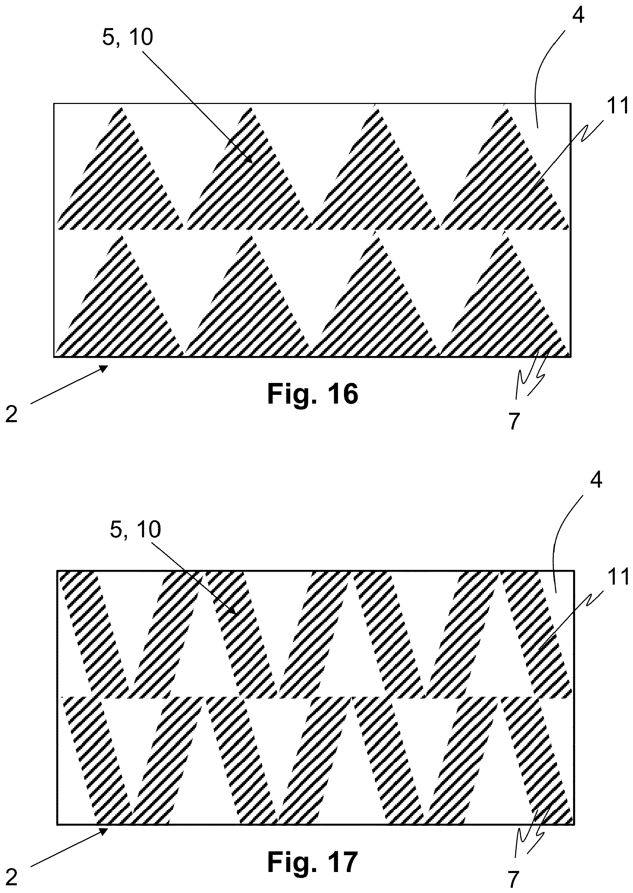

Figur 16 zeigt eine schematische Darstellung einer weiteren Haftfläche 5 mit mehreren nebeneinander und übereinander angeordneten geometrischen Figuren 11 nach einer alternativen Ausführung. Das Muster 10 beinhaltet hiermehrere nebeneinander und übereinander angeordnete geometrischen Figuren 11, die im vorliegenden als voll gefüllte Dreicke ausgebildet sind. Auch mittels dieser Ausführung kann eine vergleichsweise große Haftfläche 5 auf einer Oberfläche 4 einer Metallkomponente 2 erzeugt werden, ohne die gesamte Fläche der Haftfläche 5 mit Gravurlinien 7 zu strukturieren.

Eine weitere Ausführung einer Haftfläche 5 mit mehreren nebeneinander und übereinander angeordneten geometrischen Figuren 11 ist in Figur 17 gezeigt. Die geometrischen Figuren 11 sind dabei als nur teilweise gefüllte Dreiecke ausgebildet, die jeweils aus zwei trapezförmigen Schenkeln gebildet sind. Es hat sich gezeigt, dass bei einer derartigen Ausführung die Haftkraft trotz des vergleichsweise geringen Flächenanteils der mit Gravurlinien 7 strukturierten Fläche sehr hoch ist und gegenüber den voll gefüllten Dreiecken kaum reduziert ist. Es kann hierdurch mit einer sehr kurzen Zykluszeit eine Haftfläche mit einer sehr guten Haftkraft erzeugt werden.

Mittels der beschriebenen Mikrostrukturierungen 6 können nicht nur besonders gut haftende Mikrostrukturen mit einer nur sehr geringen Profiltiefe t hergestellt werden, sondern diese können auch in einer besonders kurzen Prozesszeit auf die Oberfläche 4 der Metallkomponente 2 aufgebracht werden. Die Prozesszeit kann noch weiter verkürzt werden, wenn nicht die gesamte Haftflächen 5 strukturiert wird, sondern lediglich einzelne Bereiche der Haftflächen 5, beispielsweise in Form eines Musters 10, bei welchem größere Flächenanteile von der Strukturierung ausgenommen sind, bzw. das Muster 10 geometrische Figuren 11 aufweist. Das beschriebene Verfahren bzw. die beschriebenen Verbundbauteile sind daher auch als Massenteile für die Automobilindustrie geeignet.

Die vorliegende Erfindung ist nicht auf die dargestellten und beschriebenen Ausführungsbeispiele beschränkt. Abwandlungen im Rahmen der Patentansprüche sind ebenso möglich wie eine beliebige Kombination der beschriebenen Merkmale, auch wenn sie in unterschiedlichen Teilen der Beschreibung bzw. den Ansprüchen oder in unterschiedlichen Ausführungsbeispielen dargestellt und beschrieben sind, vorausgesetzt, dass kein Widerspruch zur Lehre der unabhängigen Ansprüche entsteht.

### Bezugszeichenliste

- 1: Verbundbauteil
- 2: Metallkomponente
- 3: Kunststoffkomponente
- 4: Oberfläche
- 5: Haftfläche
- 6: Mikrostruktur
- 7: Gravurlinie
- 8: Wellenberg
- 9: Wellental
- 10: Muster
- 11: geometrische Figur
- 12: Befestigungselement
- 13: Erhebung
- 14: Vertiefung
- 15: Verbindung
- 16: Seitenkanten
- 17: Ausnehmung
- 18: Erhöhung

- s: Abstand
- t: Profiltiefe
- d: Wandstärke
- α: Winkel

## Patentansprüche

1. Verfahren zur Herstellung eines Verbundbauteils (1) mit wenigstens einer Metallkomponente (2) und wenigstens einer Kunststoffkomponente (3), wobei zur Erzeugung einer haftvermittelnden Mikrostruktur (6) eine Oberfläche (4) der Metallkomponente (2) mittels eines Laserstrahls zumindest abschnittsweise aufgeraut wird, wobei wenigstens eine Haftfläche (5) auf der Oberfläche (4) erzeugt wird,
wobei die Metallkomponente (2) in ein Spritzgusswerkzeug eingelegt wird und die Kunststoffkomponente (3) in einem Spritzgussverfahren auf die in das Spritzgusswerkzeug eingelegte Metallkomponente (2) aufgebracht wird, **dadurch gekennzeichnet,**
**dass** zur Erzeugung der Mikrostruktur (6) der Laserstrahl und die zu strukturierende Oberfläche (4) der Metallkomponente (2) derart relativ zueinander bewegt werden, dass eine Mikrostruktur (6) mit mehreren voneinander beabstandeten Gravurlinien (7) und zwischen den Gravurlinien (7) angeordneten, sich entlang der Gravurlinien (7) erstreckenden Erhöhungen (18) erzeugt wird.

2. Verfahren nach dem vorherigen Anspruch, **dadurch gekennzeichnet, dass** die Gravurlinien (7) parallel zueinander und vorzugsweise in regelmäßigen Abständen (s) zueinander erzeugt werden.

3. Verfahren nach einem der vorherigen Ansprüche, **dadurch gekennzeichnet, dass** eine hinterschneidungsfreie Mikrostruktur (6) erzeugt wird.

4. Verfahren nach einem der vorherigen Ansprüche, **dadurch gekennzeichnet, dass** eine Wellenstruktur erzeugt wird, wobei die Gravurlinien (7) Wellentäler (9) ausbilden, zwischen welchen sich Wellenberge (8) erstrecken.

5. Verfahren nach einem der vorherigen Ansprüche, **dadurch gekennzeichnet, dass** die Metallkomponente (2) vor dem Aufbringen der Kunststoffkomponente (3) aufgeheizt wird, wobei vorzugsweise die Metallkomponente (2) durch Einlegen in das Spritzgusswerkzeug aufgeheizt wird.

6. Verbundbauteil (1) mit wenigstens einer Metallkomponente (2) und wenigstens einer Kunststoffkomponente (3),
wobei eine Oberfläche (4) der Metallkomponente (2) wenigstens eine Haftfläche (5) mit einer mittels eines Laserstrahls erzeugten, haftvermittelnden Mikrostruktur (6) aufweist,
und wobei die Kunststoffkomponente (3) auf die Metallkomponente (2) aufgespritzt ist,
**dadurch gekennzeichnet,**
**dass** die Mikrostruktur (6) mehrere voneinander beabstandete Gravurlinien (7) und zwischen den Gravurlinien (7) angeordnete, sich entlang der Gravurlinien (7) erstreckende Erhöhungen (18) aufweist.

7. Verbundbauteil nach dem vorherigen Anspruch, **dadurch gekennzeichnet, dass** die Gravurlinien (7) parallel zueinander und vorzugsweise in regelmäßigen Abständen (s) zueinander angeordnet sind, wobei vorzugsweise die Gravurlinien (7) einen Abstand von 0,05 mm - 0,5 mm, bevorzugt von 0,1 mm - 0,3 mm, zueinander aufweisen.

8. Verbundbauteil nach einem der vorherigen Ansprüche, **dadurch gekennzeichnet, dass** die Mikrostruktur (6) hinterschneidungsfrei ist.

9. Verbundbauteil nach einem der vorherigen Ansprüche, **dadurch gekennzeichnet, dass** die Mikrostruktur (6) eine maximale Profiltiefe (t) von weniger als 50 µm, vorzugsweise weniger als 25 µm, besonders bevorzugt weniger als 20 µm aufweist.

10. Verbundbauteil nach einem der vorherigen Ansprüche, **dadurch gekennzeichnet, dass** die Metallkomponente (2) eine Wandstärke (d) von weniger als 1 mm, vorzugsweise von weniger als 0,7 mm und besonderes bevorzugt von weniger als 0,5 mm aufweist.

11. Verbundbauteil nach einem der vorherigen Ansprüche, **dadurch gekennzeichnet, dass** die Gravurlinien (7) auf der wenigstens einen Haftfläche (5) ein makroskopisches Muster (10) ausbilden, wobei vorzugsweise das makroskopische Muster (10) wenigstens eine geometrische Figur (11) beinhaltet, vorzugsweise mehrere nebeneinander und/oder übereinander angeordnete geometrische Figuren (11), insbesondere Kreise und/oder Ringe und/oder Dreiecke und/oder Vierecke, beinhaltet.

12. Verbundbauteil nach einem der vorherigen Ansprüche, **dadurch gekennzeichnet, dass** mehrere, voneinander beabstandete Haftflächen (5) auf der Oberfläche (4) der Metallkomponente (2) angeordnet sind.

13. Verbundbauteil nach einem der vorherigen Ansprüche, **dadurch gekennzeichnet, dass** die wenigstens eine Haftfläche (5) eine Mikrostruktur (6) mit wenigstens zwei um einen Winkel (a) zueinander versetzten und einander überlagerten Gravurlinien (7) aufweist.

14. Verbundbauteil nach einem der vorherigen Ansprüche, **dadurch gekennzeichnet, dass** die Kunststoffkomponente (3) ein thermoplastisches Polymer, insbesondere ein Polypropylen (PP) und/oder ein Acrylnitril-Butadien-Styrol (ABS) und/oder ein Polyamid (PA) oder ein diese Materialien enthaltendes Compound-Material beinhaltet und/oder dass die Kunststoffkomponente (3) ein oberflächenaktiviertes, thermoplastisches Compoundmaterial beinhaltet.

15. Verbundbauteil nach einem der vorherigen Ansprüche, **dadurch gekennzeichnet, dass** die Metallkomponente (2) und die Kunststoffkomponente (3) nur mittels der haftvermittelnden Mikrostruktur (6) miteinander verbunden sind.

16. Verbundbauteil nach einem der vorherigen Ansprüche, **dadurch gekennzeichnet, dass** die Kunststoffkomponente (3) direkt angespritzte Befestigungselemente (12) zur Befestigung des Verbundbauteils (1) aufweist.
